# EUROPÄISCHE PATENTSCHRIFT

(11) **EP 0 886 818 B1**
(45) Veröffentlichungstag und Bekanntmachung des Hinweises auf die Patenterteilung: **26.01.2000**
(21) Anmeldenummer: 97922812.9
(22) Anmeldetag: 14.03.1997
(51) Int. Cl.: G06F 1/16

(54) **MODULANORDNUNG ZUR ERGÄNZUNG TRANSPORTABLER COMPUTER**
MODULAR ARRANGEMENT FOR SUPPLEMENTING PORTABLE COMPUTERS
SYSTEME MODULAIRE POUR COMPLETER UN ORDINATEUR PORTATIF

(30) Priorität: 14.03.1996 DE 19610017; 07.10.1996 DE 19641015
(43) Veröffentlichungstag der Anmeldung: 30.12.1998
(73) Patentinhaber: Schneider, Bernd, 01462 Ockerwitz (DE)
(72) Erfinder: Schneider, Bernd, 01462 Ockerwitz (DE)
(74) Vertreter: Adler, Peter, Dipl.-Ing.
(86) Internationale Anmeldenummer: DE9700531
(87) Internationale Veröffentlichungsnummer: WO9734214

(56) Entgegenhaltungen:
- EP-A- 0 530 829
- DE-U- 29 510 291
- US-A- 5 459 637

## Beschreibung

Die Erfindung betrifft eine Modulanordnung zur Ergänzung transportabler Computer mit einem Grundgerät, in das der transportable Computer einsetzbar ist und an das Ergänzungselemente anschließbar sind, wobei zwischen dem Computer und dem Grundgerät eine Datenverbindung besteht und das Grundgerät mit Anschlußmitteln zum Betriebsspannungs- und/oder Datenanschluß von Ergänzungselementen versehen ist.

Eine Anordnung der eingangs genannten Art ist aus dem deutschen Gebrauchsmuster 295 10 291.8 bekannt. Darin ist ein Grundgerät vorgesehen, das mit einem Datenanschluß zum Anschluß an einen Computer versehen ist. An der Außenseite des Grundgerätes ist ein erstes Verbindungselement zum Anschluß von Ergänzungselementen angeordnet. Weiterhin ist darin das Grundgerät zweigeteilt ausgeführt, indem ein Aufnahmeteil und ein Anschlußteil vorgesehen sind. Das Anschlußteil ist mit Datenanschlüssen und/oder Stromversorgungsanschlüssen versehen, die die Seite des Computers umgreifen. Dieses Anschlußteil dient der Befestigung des Computers an dem Aufnahmeteil des Grundgerätes, wobei das Anschlußteil mit dem Computer ständig verbunden ist. Insbesondere sind dabei die Datenanschlüsse ständig an dem Computer eingesteckt, wodurch seine äußere Form sehr oft vergrößert wird, was insbesondere bei tragbaren Taschencomputern negativ zum Tragen kommt.

Außerdem berücksichtigt die Anordnung nach dem Stand der Technik bei der Verbindung zwischen dem Aufnahmeteil und dem Anschlußteil nicht, daß sich gegebenenfalls die äußere Form des Computers dadurch verändern kann, daß beim Aufklappen desselben beispielsweise der Deckel die Unterseite des Computers anhebt. Außerdem wird für jedes Ergänzungselement grundsätzlich ein Grundgerät benötigt, da das Grundgerät nie selbst Ergänzungselement sein kann.

Die Aufgabe der vorliegenden Erfindung besteht nunmehr darin, eine Modulanordnung der eingangs genannten Art dadurch auszubilden, daß der Computer für den Einsatz an einer Modulanordnung in seiner äußeren Gestaltung im wesentlichen unverändert bleiben kann und der Einsatz eines Grundgerätes, das keine Ergänzungsfunktionen aufweist, vermieden werden kann.

Die Aufgabe wird gemäß der Erfindung dadurch gelöst, daß an einer Kante der Oberseite des Grundgerätes anliegend ein Anschlußstück angeordnet ist. Dieses Anschlußstück überragt die Oberseite des Computers in einer Höhe, die geringer ist als die Höhe des Grundgerätes selbst. In Richtung der Kante des Grundgerätes weist dieses Anschlußstück eine Länge auf, die höchstens gleich der Kantenlänge ist. An seiner im wesentlichen senkrecht zur Oberseite stehenden und zur Oberseite des Grundgerätes weisenden Innenseite ist das Anschlußstück mit einem Verbindungsstecker für die Anschlüsse zur Datenverbindung mit dem Computer, wenn dieser sich in einer Arretierposition befindet, versehen. Auf der an der Oberseite des Grundgerätes liegenden Unterseite ist das Anschlußstück mit einer Verbindung zu dem Grundgerät versehen. Das Grundgerät selbst weist auf der Seite, an der das Anschlußstück angeordnet ist, eine der Form des Anschlußstükkes entsprechende Aussparung auf. In der Grundfläche der Aussparung ist eine Steckeraufnahme vorgesehen, die der Größe des Verbindungssteckers entspricht. Auf der Oberseite des Grundgerätes sind erste Befestigungsnasen angeordnet. Weiterhin ist eine erste Befestigungsplatte vorgesehen, die mit der Unterseite des Computers fest verbunden ist. In diese erste Befestigungsplatte sind erste Befestigungsaussparungen zur Aufnahme der ersten Befestigungsnasen in einer Einsetzposition angeordnet. Diese Befestigungsaussparungen verjüngen sich in der Art, daß sie in der Arretierposition unter die ersten Befestigungsnasen greifen. Schließlich sind auf der Oberseite des Grundgerätes zweite Befestigungsaussparungen und/oder zweite Befestigungsnasen und an entsprechenden Positionen an der Unterseite im Gegensatz zweite Befestigungsnasen und/oder zweite Befestigungsaussparungen angeordnet.

Insbesondere durch die erste Befestigungsplatte wird erreicht, daß eine Verbindungsmöglichkeit zwischen dem Computer und dem Grundgerät geschaffen wird, ohne daß damit eine wesentliche Veränderung der äußeren Gestaltung des Computers eintritt. Dies ist insbesondere bei tragbaren Taschencomputern von Vorteil, da diese ohne Einschränkungen weiter auch als Einzelgeräte Verwendung finden können. Mit einer derartigen ersten Grundplatte versehen, kann der Computer mit einem einfachen Handgriff in seiner Einsetzposition auf das Grundgerät aufgesetzt und in seine Arretierposition geschoben werden. Bei diesem Vorgang wird einerseits erreicht, daß der Computer auf der Oberseite des Grundgerätes festgelegt wird und daß andererseits eine Verbindung zwischen dem Computer und dem Anschlußstück hergestellt wird. Da das Anschlußstück seinerseits eine Verbindung mit dem Grundgerät aufweist, ist somit zumindest die Datenverbindung zwischen dem Computer und dem Grundgerät hergestellt.

Die in dem Grundgerät angeordnete Aussparung ermöglicht es, weitere Körper, die vergleichbare Anschlußstücken wie das Grundgerät aufweisen, unter dem Grundgerät anzuordnen und somit eine Stapelung von einem Grundgerät mit einem oder mehreren Ergänzungselementen zu ermöglichen. Für die mechanische Verbindung zwischen dem Grundgerät und Ergänzungselementen dienen die zweiten Befestigungsaussparungen mit den entsprechenden zweiten Befestigungsnasen. In einer bevorzugten Ausführungsform der Erfindung ist vorgesehen, daß sowohl das Anschlußstück als auch die ersten Befestigungsnasen auf der Oberseite des Grundgerätes dadurch mittelbar angeordnet sind, daß diese auf einer zweiten Befestigungsplatte angeordnet sind. Diese zweite Befestigungsplatte liegt auf der Oberseite des Grundgerätes und ist an einer Kante mittels eines Scharniergelenkes schwenkbar an dem Grundgerät angelenkt.

Durch diese Ausführung wird erreicht, daß einerseits eine mechanisch feste Verbindung zwischen dem Computer und dem Grundgerät und ebenso eine feste Datenverbindung zwischen dem Anschlußstück und dem Computer erreicht wird. Andererseits erlaubt das Scharniergelenk, daß sich gegebenenfalls die äußere Kontur beim Aufklappen des Computers verändern kann. Dies ist bei zahlreichen Computern zweckmäßigerweise der Fall, um ein Schrägstellen der Tastatur bei aufgeklapptem Bildschirm zu erzeugen, was die Bedienung vereinfacht. Die zweite Befestigungsplatte kann infolge der Anlenkung über das Scharniergelenk an dem Grundgerät diese Schrägstellung nachvollziehen. Damit wird die volle Funktionsfähigkeit des Computers gewährleistet, auch wenn dieser in einem erfindungsgemäßen Grundgerät eingesetzt ist.

In einer besonders günstigen Ausgestaltung ist vorgesehen, daß die zweite Befestigungsplatte aus einem federnden Blech besteht und daß das Scharniergelenk durch Durchbrechungen und/oder Verjüngungen im Bereich der Schwenkachse ausgeführt ist. Einerseits kann durch eine derartige Ausgestaltung ein Scharniergelenk mit einfachsten technischen Mitteln realisiert werden. Andererseits ist es dadurch möglich, die federnden Eigenschaften der zweiten Befestigungsplatte auszunutzen und den Computer auf die Oberseite des Grundgerätes zu drücken, wenn dieser nicht aufgeklappt ist. Beim Aufklappen selbst wird die Federkraft überwunden, wodurch die Schrägstellung bewerkstelligt werden kann und der Computer mit seiner Unterseite dennoch kraftschlüssig an der Oberseite des Grundgerätes anliegt. Somit ist eine mechanische Stabilität der Verbindung weitgehend sichergestellt.

In einer weiteren Ausgestaltung ist vorgesehen, daß die erste Befestigungsplatte zur Unterseite des Computers mit einem Abstand befestigt ist, der der Höhe der ersten Befestigungsnasen beim Eingriff in die ersten Befestigungsaussparungen entspricht. Durch eine derartige Konfiguration kann die erste Befestigungsplatte aus einem einfach herzustellenden Stanzblech bestehen, wobei die Durchbrechungen als Stanzlöcher ausgeführt sind, die durch den Abstand hinreichenden Raum für einen Eingriff der ersten Befestigungsnasen bieten.

In einer weiteren Ausgestaltung der Erfindung ist vorgesehen, daß die zweiten Befestigungsnasen durch die ersten Befestigungsnasen gebildet werden. Bei einer derartigen Ausgestaltung würden die Unterseiten aller Elemente, das heißt sowohl des Grundgerätes als auch der Ergänzungselemente so ausgestaltet werden, wie die Unterseite des Computers, wodurch unterschiedliche Befestigungsmittel entfallen können. Insbesondere bietet sich diese Ausgestaltung bei denjenigen Computern an, die keine Schwenkbewegung ausführen und somit starr auf der Oberseite des Grundgerätes angeordnet werden können. Dementsprechend können auch die Ergänzungselemente mit dem Grundgerät oder direkt mit dem Computer starr verbunden werden.

Weiterhin kann es zweckmäßig sein, daß auf der Innenseite des Anschlußstückes ein zusätzliches optisches Verbindungselement angeordnet ist, welches mit einem weiteren optischen Verbindungselement in der Aussparung korrespondiert. Über derartige optische Verbindungselemente besteht die Möglichkeit, Datenverbindungen zwischen Anschlußstücken und dem Grundgerät beziehungsweise den Ergänzungselementen herzustellen, ohne dabei eine mechanisch einrastende Datenverbindung bewerkstelligen zu müssen. Dies kann in erheblichem Maße den Herstellungsaufwand minimieren.

Besonders zweckmäßig ist es, die zweiten Befestigungsnasen und die zweiten Befestigungsaussparungen als spannungsführende Teile zur Versorgung von Ergänzungselementen mit Betriebsspannung auszubilden. Dadurch entfallen zusätzliche Verbindungselemente und die Ergänzungselemente werden beim Herstellen einer mechanischen Verbindung zwischen den Ergänzungselementen oder mit dem Grundgerät automatisch an Betriebsspannungspotential gelegt.

In einer weiteren zweckmäßigen Ausgestaltung ist eine Sperrklinke vorgesehen, die als aus der Oberseite federnd hervorstehende Nase ausgeführt ist. Diese Nase ist in der Einsetzposition nach unten gedrückt und in der Arretierposition greift sie in eine Verriegelungsaussparung an der Unterseite des Computers ein. Zur Entriegelung ist an dieser Sperrklinke ein Niederhalter eingreifbar. Im einfachsten Falle kann dieser Niederhalter ein von außen einführbares Hilfsmittel sein.

Es ist besonders günstig, die Sperrklinke als Teil der zweiten Befestigungsplatte auszusägen und die Verriegelungsaussparung in der ersten Befestigungsplatte anzuordnen. Dadurch entfallen zusätzliche mechanische Verriegelungsmechanismen.

Die erfindungsgemäße Aufgabe wird auch dadurch gelöst, daß an der Oberseite des Grundgerätes eine Kontaktfläche angeordnet ist, die mit einer an der Unterseite des Computers befestigten Befestigungsplatte derart in Wirkungsverbindung steht, daß zwischen der Kontaktfläche und der Befestigungsplatte bei ein- oder aufgesetztem Computer ein Form- und/oder Kraftschluß besteht und daß an der Unterseite des Grundgerätes eine Befestigungsplatte angeordnet ist, mit der eine Wirkungsverbindung zu einer an der Oberseite eines Ergänzungselementes befestigten Kontaktfläche derart herstellbar ist, daß zwischen der Kontaktfläche und der Befestigungsplatte bei ein- oder aufgesetztem Ergänzungselement ein Form- und/oder Kraftschluß besteht.

Durch die Befestigungsplatte wird erreicht, daß eine Verbindungsmöglichkeit zwischen dem Computer und dem Grundgerät geschaffen wird, ohne daß damit eine wesentliche Veränderung der äußeren Gestaltung des Computers eintritt. Dies ist insbesondere bei tragbaren Taschencomputern von Vorteil, da diese ohne Einschränkungen weiter als Einzelgeräte Verwendung finden können. Mit einer Befestigungsplatte versehen, kann der Computer mit einem einfachen Handgriff in seiner Einsetzposition auf das Grundgerät aufgesetzt und fixiert werden.

Eine Ausgestaltung dieser zweiten Lösung sieht vor, daß zur Herstellung der Datenverbindung zwischen dem Grundgerät und dem Computer an einer Seite des Grundgerätes ein Anschlußkabel vorgesehen ist, das ein mit einem Datenverbindungsanschluß des Computers kompatiblen Verbindungsstecker aufweist.

Mit dem Aufsetzen und Fixieren eines Computers auf die Oberfläche des Grundgerätes wird es anschließend möglich, daß über das Anschlußkabel eine Verbindung zu dem Computer hergestellt wird. Da das Anschlußkabel seinerseits eine Verbindung mit dem Grundgerät aufweist, ist somit zumindest eine Datenverbindung zwischen dem Computer und dem Grundgerät hergestellt, falls dieser nicht über eine drahtlose Datenverbindung verfügt.

Eine weitere Ausgestaltung ist dadurch gekennzeichnet, daß an der Seite des Grundgerätes, an der das Anschlußkabel angeordnet ist, eine der Form des Verbindungssteckers entsprechende Aussparung aufweist, in deren Grundfläche eine Steckeraufnahme, die der Größe des Verbindungssteckers entspricht, angeordnet ist.

Diese Aussparung ermöglicht es, weitere Körper, die vergleichbare als Anschlußstücken ausgebildete Verbindungsstecker aufwiesen, unter dem Grundgerät anzuordnen und somit eine Stapelung von einem Grundgerät mit einem oder mehreren Ergänzungselementen zu ermöglichen. Für die mechanische Verbindung zwischen dem Grundgerät und Ergänzungselementen dienen die Kontaktflächen und Befestigungsplatten mit den entsprechenden Hafteigenschaften.

Mit dieser Ausgestaltung ist es auch möglich, daß das Anschlußkabel eines Ergänzungselementes in das Grundgerät aufgenommen werden kann, wodurch eine mechanische Datenbusverbindung zwischen dem Computer, Grundgerät und Ergängzungselementen realisiert wird.

Durch diese Ausführung wird erreicht, daß einerseits eine mechanisch feste Verbindung zwischen dem Computer und dem Grundgerät und ebenso eine feste Datenverbindung zwischen dem Anschlußkabel und dem Computer erreicht wird. Andererseits erlaubt das Anschlußkabel, daß sich gegebenenfalls die äußere Kontur beim Aufklappen des Computers verändern kann. Dies ist bei zahlreichen Computern zweckmäßigerweise der Fall, um ein Schrägstellen der Tastatur bei aufgeklapptem Bildschirm zu erzeugen, was die Bedienung vereinfacht. Damit wird die volle Funktionstüchtigkeit des Computers gewährleistet, auch wenn dieser in einem erfindungsgemäßen Grundgerät eingesetzt wird.

In einer weiteren Ausgestaltung ist vorgesehen, daß sowohl das Anschlußkabel als auch die Befestigungsplatte auf der Oberseite des Grundgerätes dadurch mittelbar angeordnet sind, daß diese auf einer zweiten Befestigungsplatte angeordnet sind, die auf der Oberseite liegt und an einer Kante mittels eines Anschlags an dem Grundgerät angelenkt ist.

Weiterhin ist es zweckmäßig, daß der Anschlag und/oder die Vorderkante der zweiten Befestigungsplatte den haftenden Drehbereich des Computers bei Schrägstellung ermöglicht.

In einer weiteren Fortbildung der zweiten Lösung ist vorgesehen, daß als Anschlußmittel zur Herstellung der Datenverbindung zwischen dem Grundgerät und dem Computer an einer Seite des Grundgerätes eine Funk-, Infrarot- oder Ultraschallverbindung vorgesehen ist.

Dies stellt eine Alternative zu dem Anschluß des Computers, des Grundgerätes und/oder der Ergänzungselemente mittels Anschlußkabel dar.

Weiterhin ist es vorteilhaft, auf der Oberseite des Grundgerätes ein zusätzliches optisches Verbindungselement anzuordnen, welches mit einem weiteren optischen Verbindungselement an der Unterseite des Grundgerätes korrespondiert.

Über derartige optische Verbindungselemente besteht die Möglichkeit, Datenverbindungen zwischen dem Computer, dem Grundgerät beziehungsweise den Ergänzungselementen herzustellen, ohne daß dabei ein mechanisch fest einrastende Datenverbindung bewerkstelligt werden muß. Dies kann in erheblichem Umfang den Herstellungsaufwand minimieren. Statt der optischen Verbindungselemente sind auch andere Kontakt- oder kontaktlose Datenübertragungselemente einsetzbar.

In einer besonders vorteilhaften Ausbildung der zweiten Lösung ist vorgesehen, daß die Kontaktfläche oder die Befestigungsplatte aus einer Magnetfolie und umgekehrt die Befestigungsplatte oder die Kontaktfläche aus weichmagnetischem Material besteht.

Dabei werden die magnetischen Eigenschaften zur Befestigung ausgenutzt, um den Computer auf der Oberseite des Grundgerätes zu halten, wenn dieser nicht aufgeklappt ist. Beim Aufklappen wird die Magnetkraft auf die vordere Kante der Befestigungsplatte gelegt, wodurch eine Schrägstellung bewerkstelligt werden kann und der Computer mit seiner Unterseite dennoch kraftschlüssig an der Oberseite des Grundgerätes anliegt. Somit ist die mechanische Stabilität der Verbindung weitgehend sichergestellt.

Es ist auch möglich, daß die Kontaktfläche und die Befestigungsplatte als jeweilige Bestandteile eines Klettverschlusses ausgebildet sind.

Die zweite Lösung kann auch dadurch ausgestaltet sein, daß die Befestigungsplatte an dem Computer zu dessen Unterseite in einem Abstand befestigt ist.

Durch eine derartige Konfiguration kann die Befestigungsplatte aus einem einfach herzustellenden Stanzblech bestehen.

In einer weiteren günstigen Ausgestaltung beider Lösungen der erfindungsgemäßen Aufgabenstellung ist vorgesehen, daß in der Steckeraufnahme für den Verbindungsstecker eine Buchse zur leitenden Verbindung angeordnet ist.

Bei dieser Ausgestaltung ist es einerseits möglich, daß der Computer in den Stecker an dem Anschlußstück eingesteckt werden kann und somit die Datenverbindung hergestellt wird. Andererseits ist es möglich, daß über den gleichen Verbindungsmechanismus auch Ergänzungselemente untereinander oder mit dem Grundgerät oder direkt mit dem Computer verbindbar sind. Zusätzliche Verbindungselemente entfallen somit.

In einer besonders günstigen Ausgestaltung der Erfindung weisen die Ergänzungselemente die gleichen Kennzeichen auf, wie das Grundgerät. Somit wird es möglich, mit einer einzigen Gehäusegestaltung ein Grundgerät und Ergänzungselemente vorzusehen, wobei infolge der Ausgestaltung der Ergänzungselemente, z.B. mit den Anschlußstücken des Grundgerätes oder mit den Anschlußkabeln des Grundgerätes auch die Ergänzungselemente, als Grundgerät dienen können. Damit entfällt die Notwendigkeit, daß zum Anschluß von Ergänzungselementen grundsätzlich ein Grundgerät vorhanden sein muß. Es ist somit auch möglich, den Computer mit einem der gewünschten Ergänzungselemente allein zu versehen.

Besonders zweckmäßig ist es, den Abstand der ersten Befestigungsplatte von der Unterseite des Computers dadurch zu bewerkstelligen, daß die erste Befestigungsplatte an der Unterseite mittels doppelseitigem Klebeband angeklebt ist. Dabei entspricht der Abstand der ersten Befestigungsplatte von der Unterseite des Computers der Dicke des Klebebandes.

Hiermit wird es möglich, die erste Befestigungsplatte als Zusatzbauteil anzubieten, welches von einem Nutzer an dem Computer selbst angebracht werden kann und das zudem besonders herstellungsgünstig ist.

Die Erfindung soll nachfolgend anhand zweier Ausführungsbeispiele näher erläutert werden. In den zugehörigen Zeichnungen zeigt
- Fig. 1: eine Draufsicht auf ein erfindungsgemäßes Grundgerät eines ersten Ausführungsbeispieles,
- Fig. 2: eine Vorderansicht des erfindungsgemäßen Grundgerätes eines ersten Ausführungsbeispieles,
- Fig. 3: eine rechte Seitenansicht des erfindungsgemäßen Grundgerätes eines ersten Ausführungsbeispieles,
- Fig. 4: eine linke Seitenansicht des erfindungsgemäßen Grundgerätes eines ersten Ausführungsbeispieles,
- Fig. 5: eine perspektivische Darstellung der Befestigungsplatten eines ersten Ausführungsbeispieles,
- Fig. 6: eine Vorderansicht auf ein erfindungsgemäßes Grundgerät nach einem zweiten Ausführungsbeispiel,
- Fig. 7: eine rechte Seitenansicht des Grundgerätes gemäß Fig. 6,
- Fig. 8: eine linke Seitenansicht des Grundgerätes gemäß Fig. 6,
- Fig. 9: perspektivische Darstellung einer Befestigungsplatte für einen Computer nach dem zweiten Ausführungsbeispiel,
- Fig. 10: eine perspektivische Darstellung einer Befestigungsplatte für ein Ergänzungsmodul
- Fig. 11: eine Unteransicht des Grundgerätes nach Fig. 6,
- Fig. 12: eine Ansicht der Rückseite des Grundgerätes nach Fig. 6,
- Fig. 13: eine Draufsicht des Grundgerätes.

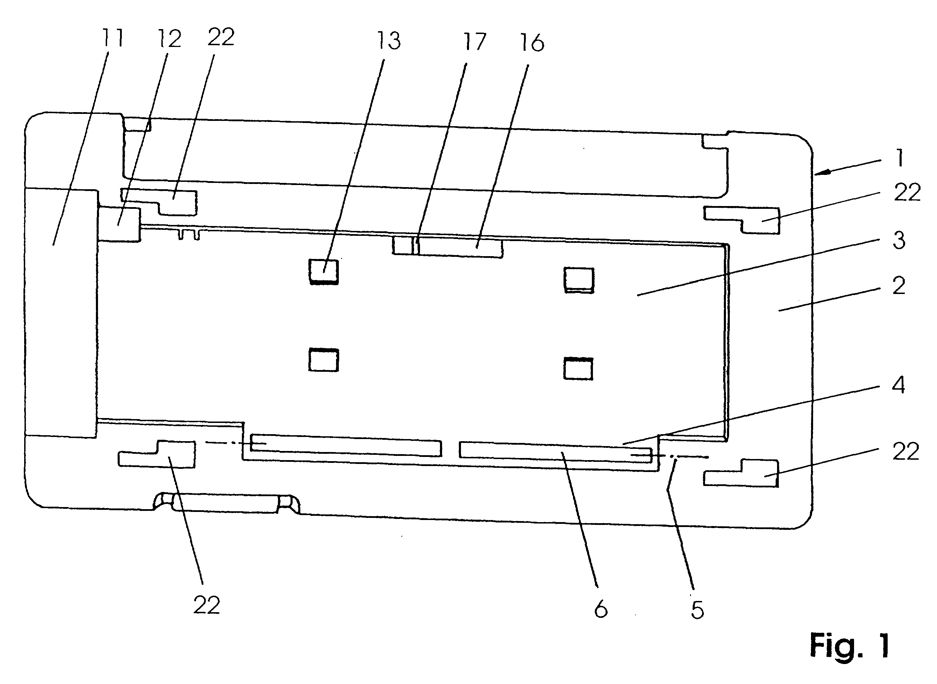

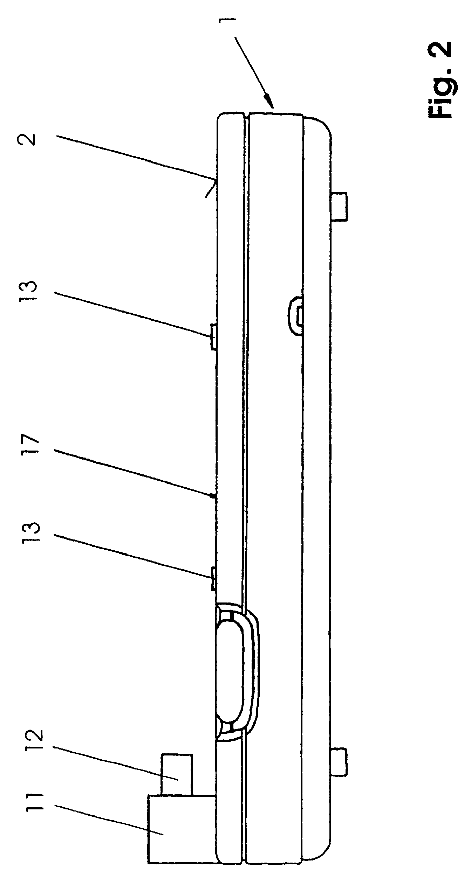

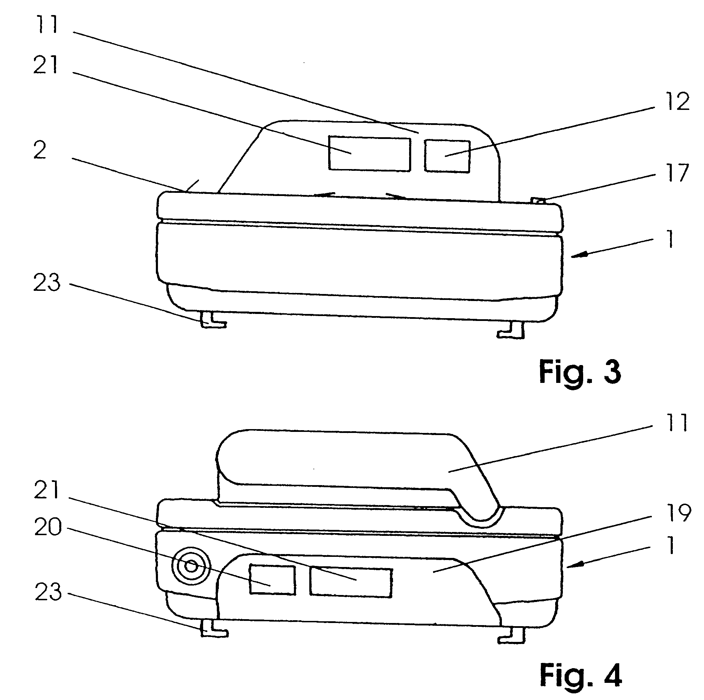

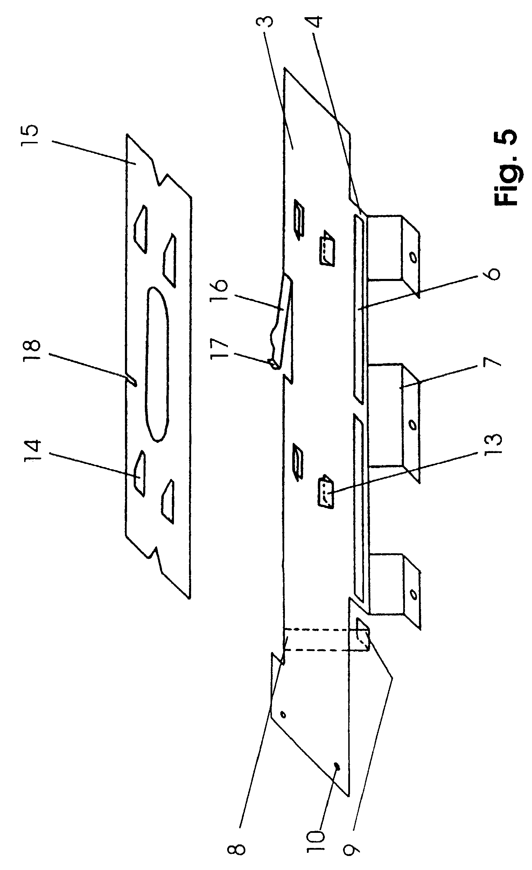

In den Figuren 1 bis 5 ist ein erstes Ausführungsbeispiel dargestellt. In der Schilderung dieses Ausführungsbeispieles wird ein Grundgerät 1 beschrieben. Dabei ist zu verstehen, daß das Grundgerät 1 ebenso ein Ergänzungselement mit den gleichen Merkmalen darstellen kann.

Das Grundgerät 1 ist im wesentlichen quaderförmig aufgebaut. Auf seiner Oberseite 2 ist eine zweite Befestigungsplatte 3 angeordnet. Diese zweite Befestigungsplatte 3 ist an einer ihrer Längsseiten mit einem Scharniergelenk 4 versehen. Dabei ist dieses Scharniergelenk 4 derart ausgebildet, daß die zweite Befestigungsplatte 3 aus federndem Blech gefertigt ist und im Bereich der Gelenkachse 5 mit Durchbrechungen 6 versehen ist. Beim Schwenken der zweiten Befestigungsplatte 3 um die Schwenkachse 5 wird das verbleibende Material zwischen den Durchbrechungen 6 elastisch verbogen und erlaubt somit eine Schwenkbewegung. Die feststehende Seite der zweiten Befestigungsplatte 3 ist durch gebogene Befestigungsarme 7 im Inneren des Grundgerätes 1 festgelegt.

Zur Begrenzung der Schwenkbewegung der zweiten Befestigungsplatte 3 und damit zur Vermeidung einer Deformation im Bereich des Scharniergelenkes 4 ist ein Anschlag 8 vorgesehen. Dieser Anschlag 8 greift mit seinem Anschlagarm 9 in das Innere des Grundgerätes 1, wobei der Anschlagarm 9 am Ende der beabsichtigten Schwenkbewegung der zweiten Befestigungsplatte 3 an der Innenseite des Grundgerätes 1 anschlägt.

In den Befestigungslöchern 10 in der zweiten Befestigungsplatte 3 ist das Anschlußstück 11 auf der Oberseite der zweiten Befestigungsplatte 3 befestigt. Damit befindet sich das Anschlußstück 11 an der außen liegenden Schmalseite des Grundgerätes 1. Auf der Innenseite ist das Anschlußstück 11 mit einem Verbindungsstecker 12 versehen. Dieser Verbindungsstekker ist in der Lage, in den Datenanschluß des nicht näher dargestellten tragbaren Taschencomputers einzugreifen.

Die zweite Befestigungsplatte 3 ist mit ersten Befestigungsnasen 13 versehen. Diese Befestigungsnasen 13 korrespondieren mit Befestigungsaussparungen 14 in der ersten Befestigungsplatte 15. Diese Befestigungsaussparungen 14 dienen der Aufnahme der Befestigungsnasen 13 in einer Einsetzposition. Beim Schieben der mit dem Computer fest verbundenen ersten Befestigungsplatte 15 nach links greifen die Verjüngungen der Befestigungsaussparung 14 unter die Befestigungsnasen 13 und legen somit die erste Befestigungsplatte 15 auf der zweiten Befestigungsplatte 3 und damit den Computer auf dem Grundgerät 1 fest.

Zur Vermeidung des Herausrutschens des Computers aus seiner Position ist eine Sperrklinke 16 vorgesehen. In der Einsetzposition ist die Sperrklinke 16 nach unten gedrückt und in der Arretierposition schnappt die Sperrklinke 16 nach oben, wobei die Klinkenase 17 in die Verriegelungsaussparung 18 eingreift.

Beim Schieben des Computers von seiner Einsetzposition in seine Arretierposition greift sogleich auch der Verbindungsstecker 12 in die nicht näher dargestellte Verbindungsbuchse des Computers ein, wodurch die Datenverbindung zu dem Computer hergestellt wird, wobei das Anschlußstück 11 eine Verbindung zum Inneren des Grundgerätes 1 aufweist.

An der linken Seitenfläche ist das Grundgerät 1 mit einer Aussparung 19 versehen. Diese Aussparung 19 ist so gestaltet, daß ein Anschlußstück 11 eines Ergänzungselementes in diese Aussparung eingreifen kann. Dabei ist in der Aussparung 19 eine Steckeraufnahme 20 für den Verbindungsstecker 12 vorgesehen, so daß der Verbindungsstecker 12 ungehindert Platz finden kann, wenn ein Ergänzungselement an dem Grundgerät 1 angeordnet wird. Die Datenverbindung zwischen dem Grundgerät und Ergänzungselementen findet über optische Verbindungselemente 21 zwischen dem Anschlußstück 11 und der Aussparung 19 statt.

Zur Befestigung von Ergänzungselementen an dem Grundgerät 1 sind auf der Oberseite des Grundgerätes 1 zweite Befestigungsaussparungen 22 vorgesehen, in die zweite Befestigungsnasen 23 eingreifbar sind. Dabei sind die zweiten Befestigungsnasen 23 als spannungsführende Teile ausgeführt, an denen die Betriebsspannung, die im Grundgerät 1 oder in einem Ergänzungselement bereitgestellt wird, anliegt. Diese Betriebsspannung wird in den zweiten Befestigungsaussparungen 22 des Ergänzungselementes entsprechend abgenommen und verarbeitet.

Die mechanische Verbindung zwischen dem Grundgerät 1 und einem Ergänzungselement erfolgt dadurch, daß auch hier wieder in einer Einsetzposition die zweiten Befestigungsnasen 23 von den zweiten Befestigungsaussparungen 22 aufgenommen werden und sodann das Ergänzungselement in eine Arretierposition geschoben wird, wobei das Anschlußstück 11 in die Aussparung 19 und damit der Verbindungsstecker 12 in die Steckeraufnahme 20 gleitet. Die Datenverbindung zwischen dem Grundgerät und einem Ergänzungselement geschieht dabei über die optischen Verbindungselemente 21.

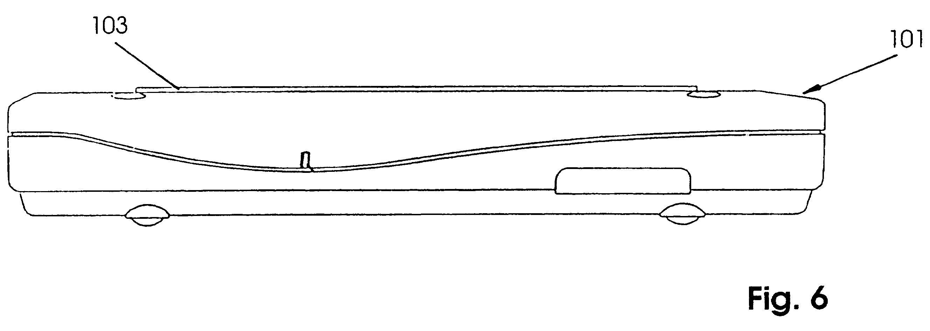

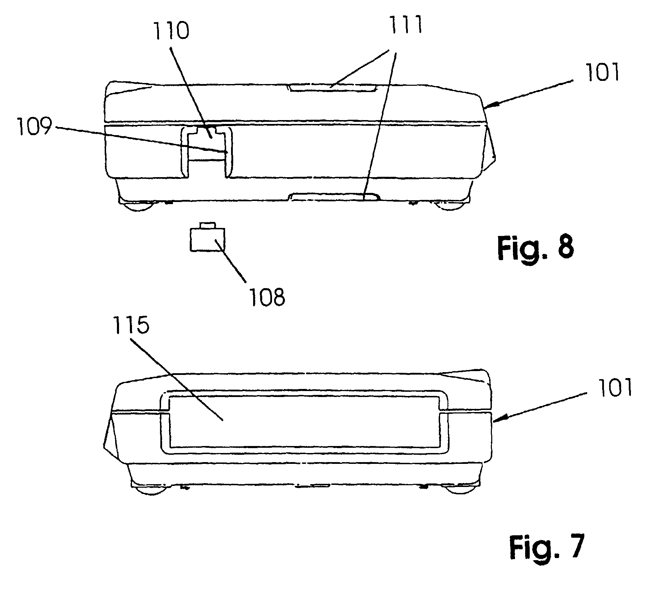

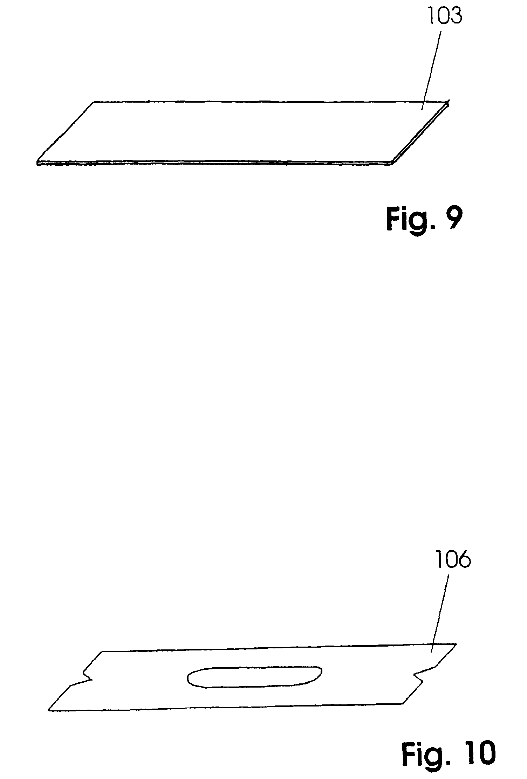

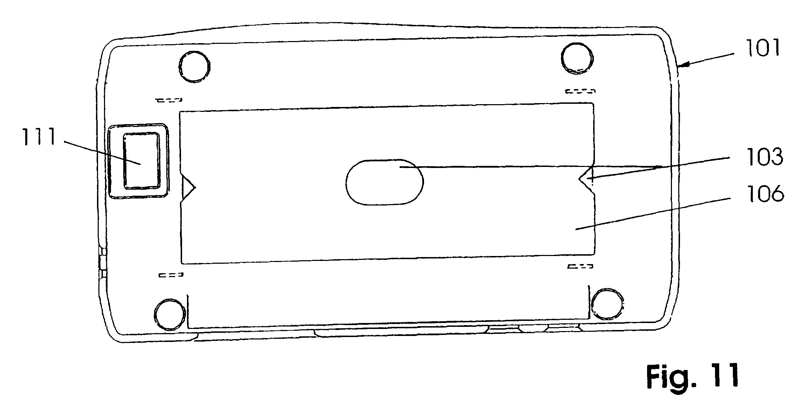

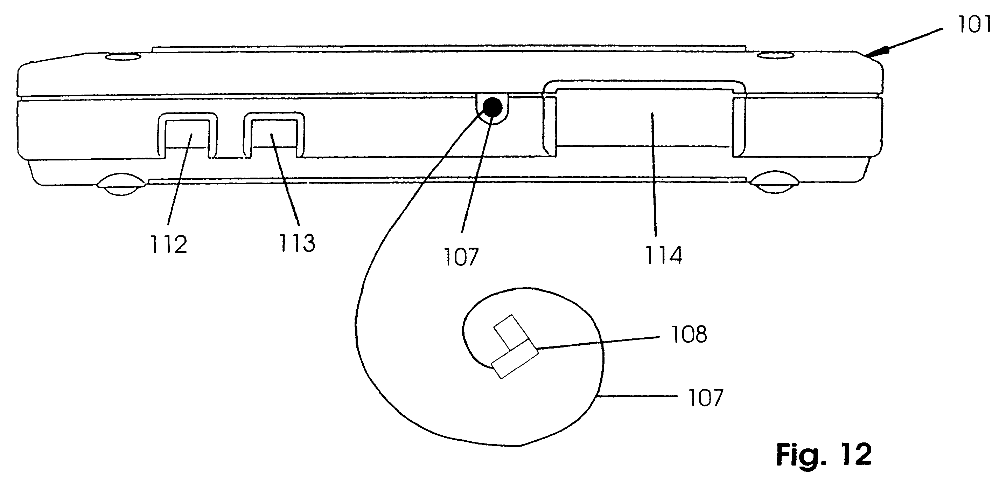

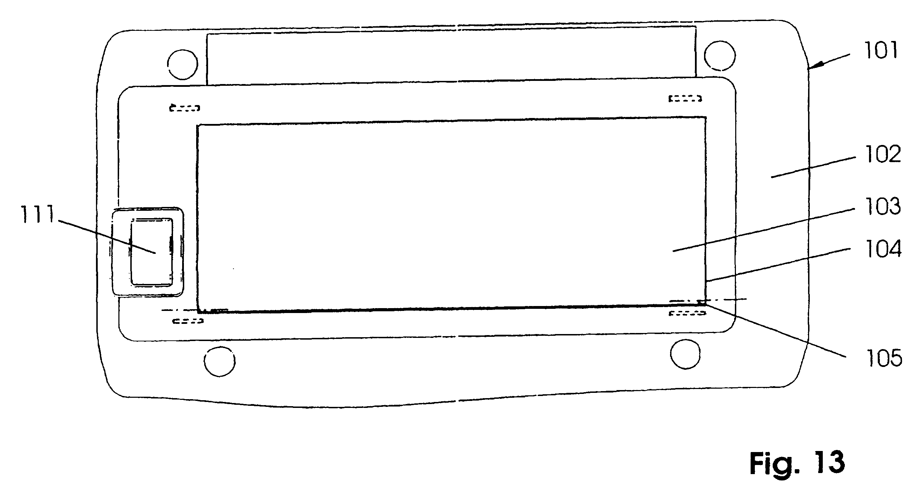

In den Figuren 6 bis 13 wird ein zweites Ausführungsbeispiel dargestellt. In diesem Ausführungsbeispiel wird ein Grundgerät 101 dargestellt, welches ebenso ein Ergänzungselement mit den gleichen Merkmalen darstellen kann.

Das Grundgerät 101 ist im wesentlichen quaderförmig aufgebaut. Auf seiner Oberseite 102 ist eine Kontaktplatte 103 angeordnet. Diese Kontaktplatte 103 ist eine selbstklebendes Magnetfolie, welche sich in einer Vertiefung 104 befindet. Die Vorderkante 105 dieser Vertiefung 104 dient gleichzeitig als Anschlag für die am Computer befindliche Befestigungsplatte 106.

In der Rückwand des Grundgerätes 101 ist ein Anschlußkabel 107 befestigt. Damit befindet sich das Anschlußkabel an der außenliegenden Rückseite des Grundgerätes 101. Am Ende ist das Anschlußkabel 107 mit einem Verbindungsstecker 108 versehen. Dieser Verbindungsstecker 108 ist in der Lage, in den Datenanschluß eines nicht näher dargestellten tragbaren Taschencomputers einzugreifen.

Der Verbindungsstecker 108 wird manuell in die nicht näher dargestellte Verbindungsbuchse des Computers eingesteckt, wodurch die Datenverbindung zu dem Computer hergestellt wird, wobei das Anschlußkabel 107 eine Verbindung zum Inneren des Grundgerätes 101 aufweist.

An der linken Seitenfläche ist das Grundgerät 101 mit einer Aussparung 109 versehen. Diese Aussparung 109 ist so gestaltet, daß ein Anschlußkabel 107 eines Ergänzungselementes in diese Aussparung 109 eingreifen kann. Dabei ist in der Aussparung 109 eine Steckeraufnahme 110 für den Verbindungsstekker 108 vorgesehen, so daß der Verbindungsstecker 108 ungehindert Platz finden kann, wenn ein Ergänzungselement an dem Grundgerät 101 angeordnet wird. Die Datenverbindung zwischen dem Grundgerät 101 und Ergänzungselementen findet über das Anschlußkabel 107 und Aussparung 109 statt. Bei Verwendung von beispielsweise optischen Verbindungselementen 111 kann das Anschlußkabel 107 entfallen. Die Betriebsspannung wird an der Rückseite über eine Buchse 112 zugeführt und kann über eine zweite Buchse 113 über Steckerkabel zu den Ergänzungsbaugruppen weitergeleitet werden.

An der Rückseite des Grundgerätes 101 ist weiterhin ein Steckverbinder 114 zum Anschluß von seriellen oder parallelen Endgeräten und an der rechten oder linken Seite des Grundgerätes 101 eine Aussparung für mehrere PC-Card-Module angeordnet.

### Modulanordnung zur Ergänzung transportabler Computer

### Bezugszeichenliste

- 1: Grundgerät
- 2: Oberseite des Grundgerätes
- 3: zweite Befestigungsplatte
- 4: Scharniergelenk
- 5: Schwenkachse
- 6: Durchbrechung
- 7: Befestiaunasarm 1
- 8: Anschlag
- 9: Anschlagsarm
- 10: Befestigungslöcher
- 11: Anschlußstück
- 12: Verbindungsstecker
- 13: Befestigungsnase
- 14: Befestigungsaussparung
- 15: erste Befestigungsplatte
- 16: Sperrklinke
- 17: Sperrnase
- 18: Verriegelungsaussparung
- 19: Aussparung
- 20: Steckeraufnahme
- 21: optisches Verbindungselement
- 22: zweite Befestigungsaussparung
- 23: zweite Befestigungsnase
- 101: Grundgerät
- 102: Oberseite des Grundgerätes
- 103: Kontaktplatte
- 104: Vertiefung
- 105: Vorderkante
- 106: Befestigungsplatte
- 107: Anschlußkabel
- 108: Verbindungsstecker
- 109: Aussparung
- 110: Steckeraufnahme
- 111: optisches Verbindungselement
- 112: Betriebsspannungsbuchse
- 113: Betriebsspannungsbuchse
- 114: Steckverbinder
- 115: Aussparung

## Patentansprüche

1. Modulanordnung zur Ergänzung transportabler Computer mit einem Grundgerät, in das der transportable Computer einsetzbar ist und an das Ergänzungselemente anschließbar sind, wobei zwischen dem Computer und dem Grundgerät eine Datenverbindung besteht und das Grundgerät mit Anschlußmitteln zum Betriebsspannungs- und/oder Datenanschluß von Ergänzungselementen versehen ist, **dadurch gekennzeichnet,**
daß an einer Kante der Oberseite (2) des Grundgerätes (1) anliegend ein Anschlußstück (11) angeordnet ist,
- das die Oberseite (2) des Grundgerätes (1) in einer Höhe überragt, die geringer ist als die Höhe des Grundgerätes (1) selbst,
- das in Richtung der Längserstreckung der Kante des Grundgerätes (1) eine Länge aufweist, die höchstens gleich der Kantenlänge ist, und
- das auf seiner im wesentlichen senkrecht zur Oberseite (2) des Grundgerätes (1) stehenden und zur Oberseite (2) des Grundgerätes weisenden Innenseite mit einem Verbindungsstecker (12) für die Anschlüsse zur Datenverbindung mit dem Computer in einer Arretierposition und auf der an der Oberseite (2) des Grundgerätes (1) liegenden Unterseite mit einer Verbindung zu dem Grundgerät (1) versehen ist,
daß das Grundgerät (1) auf der Seite des Grundgerätes (1), an der das Anschlußstück (11) angeordnet ist, eine die Form des Anschlußstückes (11) entsprechende Aussparung (19) aufweist, in deren Grundfläche eine Steckeraufnahme (20), die der Größe des Verbindungssteckers (12) entspricht, angeordnet ist,
daß auf der Oberseite des Grundgerätes (1) erste Befestigungsnasen (13) vorgesehen sind,
daß eine erste Befestigungsplatte (15) vorgesehen ist, welche mit der Unterseite des Computers fest verbunden ist und die erste Befestigungsaussparungen (14) zur Aufnahme der ersten Befestigungsnasen (13) in einer Einsetzposition aufweist, die sich in der Arretierposition unter die ersten Befestigungsnasen (13) greifend verjüngen und
daß auf der Oberseite (2) des Grundgerätes (1) zweite Befestigungsaussparungen (22) und/oder zweite Befestigungsnasen und an entsprechenden Positionen an der Unterseite im Gegensatz zweite Befestigungsnasen und/oder zweite Befestigungsaussparungen (22) zur Befestigung von Ergänzungselementen angeordnet sind.

2. Modulanordnung nach Anspruch 1, **dadurch gekennzeichnet**, daß sowohl das Anschlußstück (11) als auch die ersten Befestigungsnasen (13) auf der Oberseite (2) des Grundgerätes (1) dadurch mittelbar angeordnet sind, daß diese auf einer zweiten Befestigungsplatte (3) angeordnet sind, die auf der Oberseite (2) liegt und an einer Kante mittels eines Scharniergelenkes (4) schwenkbar an dem Grundgerät (1) angelenkt ist.

3. Modulanordnung nach Anspruch 2, **dadurch gekennzeichnet**, daß die zweite Befestigungsplatte (3) aus federndem Blech besteht und daß das Scharniergelenk (4) durch Durchbrechungen (6) und /oder Verjüngungen im Bereich der Schwenkachse (5) ausgeführt ist.

4. Modulanordnung nach Anspruch 1 bis 3, **dadurch gekennzeichnet**, daß die zweiten Befestigungsnasen (23) durch die ersten Befestigungsnasen (13) gebildet werden.

5. Modulanordnung nach Anspruch 2 oder 4, **dadurch gekennzeichnet**, daß die erste Befestigungsplatte (15) zur Unterseite des Computers mit einem Abstand befestigt ist, der der Höhe der ersten Befestigungsnasen (13) beim Eingriff in die ersten Befestigungsaussparungen (14) entspricht.

6. Modulanordnung nach Anspruch 1 bis 5, **dadurch gekennzeichnet**, daß auf der Innenseite des Anschlußstückes (11) ein zusätzliches optisches Verbindungselement (21) angeordnet ist, welches mit einem weiteren optischen Verbindungselement (21) in der Aussparung (19) korrespondiert.

7. Modulanordnung nach Anspruch 1 bis 6, **dadurch gekennzeichnet**, daß die zweiten Befestigungsnasen (23) und die zweiten Befestigungsaussparungen (22) als spannungsführende Teile zur Versorgung von Ergänzungselementen mit Betriebsspannung ausgebildet sind.

8. Modulanordnung nach Anspruch 2 bis 7, **dadurch gekennzeichnet**, daß eine Sperrklinke (16) vorgesehen ist, die als aus der Oberseite federnd hervorstehende Nase (17) ausgeführt ist, die in der Einsetzposition nach unten gedrückt ist und in der Arretierposition in eine Verriegelungsaussparung (18) an der Unterseite des Computers eingreift und an der ein Niederhalter zur Entriegelung angreifbar ist.

9. Modulanordnung nach Anspruch 8, **dadurch gekennzeichnet**, daß die Sperrklinke (16) als Teil der zweiten Befestigungsplatte (3) ausgesägt ist und die Verriegelungsaussparung (18) in der ersten Befestigungsplatte (15) angeordnet ist.

10. Modulanordnung zur Ergänzung transportabler Computer mit einem Grundgerät, auf oder in das der transportable Computer auf- oder einsetzbar ist und an das ein oder mehrere Ergänzungselemente anschließbar sind, wobei zwischen dem Computer und dem Grundgerät eine Datenverbindung besteht und das Grundgerät mit Anschlußmitteln zum Betriebsspannungs- und/oder Datenanschluß von Ergänzungselementen versehen ist, **dadurch gekennzeichnet**, daß an der Oberseite (102) des Grundgerätes (101) eine Kontaktplatte (103) angeordnet ist, die mit einer an der Unterseite des Computers befestigten Befestigungsplatte (106) derart in Wirkungsverbindung steht, daß zwischen der Kontaktplatte (103) und der Befestigungsplatte (106) bei ein- oder aufgesetztem Computer ein Form- und/oder Kraftschluß besteht und daß an der Unterseite des Grundgerätes (101) eine Befestigungsplatte (106) angeordnet ist, mit der eine Wirkungsverbindung zu einer an der Oberseite eines Ergänzungselementes befestigten Kontaktplatte (103) derart herstellbar ist, daß zwischen der Kontaktplatte (103) und der Befestigungsplatte (106) bei ein- oder aufgesetztem Ergänzungselement ein Form- und/oder Kraftschluß besteht.

11. Modulanordnung zur Ergänzung transportabler Computer nach Anspruch 10, **dadurch gekennzeichnet**, daß zur Herstellung der Datenverbindung zwischen dem Grundgerät und dem Computer an einer Seite des Grundgerätes (101) ein Anschlußkabel (107) vorgesehen ist, das ein mit einem Datenverbindungsanschluß des Computers kompatiblen Verbindungsstecker (108) aufweist.

12. Modulanordnung zur Ergänzung transportabler Computer nach Anspruch 11, **dadurch gekennzeichnet**, daß an der Seite des Grundgerätes (101), an der das Anschlußkabel (107) angeordnet ist, eine die Form des Verbindungssteckers (108) entsprechende Aussparung (109) aufweist, in deren Grundfläche eine Steckeraufnahme (110), die der Größe des Verbindungssteckers (108) entspricht, angeordnet ist.

13. Modulanordnung zur Ergänzung transportabler Computer nach Anspruch 10 oder 11 , **dadurch gekennzeichnet**, daß sowohl das Anschlußkabel (107) als auch die Befestigungsplatte (106) auf der Oberseite (102) des Grundgerätes (101) dadurch mittelbar angeordnet sind, daß diese auf einer zweiten Befestigungsplatte angeordnet sind, die auf der Oberseite (102) liegt und an einer Kante mittels eines Anschlags an dem Grundgerät angelenkt ist.

14. Modulanordnung zur Ergänzung transportabler Computer nach Anspruch 13, **dadurch gekennzeichnet**, daß der Anschlag und/oder die Vorderkante der zweiten Befestigungsplatte den haftenden Drehbereich des Computers bei Schrägstellung ermöglicht.

15. Modulanordnung zur Ergänzung transportabler Computer nach Anspruch 10, **dadurch gekennzeichnet**, daß als Anschlußmittel zur Herstellung der Datenverbindung zwischen dem Grundgerät und dem Computer an einer Seite des Grundgerätes eine Funk-, Infrarot- oder Ultraschallverbindung vorgesehen ist.

16. Modulanordnung zur Ergänzung transportabler Computer nach einem der Ansprüche 10 bis 15, **dadurch gekennzeichnet**, daß auf der Oberseite des Grundgerätes ein zusätzliches optisches Verbindungselement (111) angeordnet ist, welches mit einem weiteren optischen Verbindungselement (111) an der Unterseite des Grundgerätes (101) korrespondiert.

17. Modulanordnung zur Ergänzung transportabler Computer nach einem der Ansprüche 10 bis 16, **dadurch gekennzeichnet**, daß die Kontaktfläche (103) oder die Befestigungsplatte (106) aus einer Magnetfolie und umgekehrt die Befestigungsplatte (106) oder die Kontaktfläche (103) aus weichmagnetischem Material besteht.

18. Modulanordnung zur Ergänzung transportabler Computer nach einem der Ansprüche 10 bis 17, **dadurch gekennzeichnet,** daß die Kontaktfläche (103) und die Befestigungsplatte (106) als jeweilige Bestandteile eines Klettverschlusses ausgebildet sind.

19. Modulanordnung zur Ergänzung transportabler Computer nach einem der Ansprüche 10 bis 18, **dadurch gekennzeichnet**, daß die Befestigungsplatte (106) an dem Computer zu dessen Unterseite in einem Abstand befestigt ist.

20. Modulanordnung nach Anspruch 1 bis 19, **dadurch gekennzeichnet**, daß in der Steckeraufnahme (20; 110) für den Verbindungsstecker (12; 108) eine Buchse zur leitenden Verbindung vorgesehen ist.

21. Modulanordnung nach Anspruch 1 bis 20, **dadurch gekennzeichnet**, daß die Ergänzungselemente die gleichen Kennzeichen aufweisen wie das Grundgerät (1; 101).

22. Modulanordnung nach Anspruch 5 oder 19 , **dadurch gekennzeichnet**, daß der Abstand zur Unterseite des Computers dadurch bewerkstelligt wird, daß die Befestigungsplatte (15; 106) an dem Computer mittels eines Doppelklebebandes befestigt wird, wobei der Abstand der Befestigungsplatte (15; 106) von der Unterseite des Computers der Dicke des Doppelklebebandes entspricht.

## Claims

1. Module arrangement for extending portable computers with a basic appliance in which the portable computer can be inserted and to which extension elements can be connected, whereby there is a data link between the computer and the basic appliance is equipped with terminals for operating voltage and/or data connections for extension elements, **characterized**
**by the fact** that a connection piece (11) is located at an edge of the upper side (2) of the basic appliance (1) which projects beyond the upper side (2) of the basic appliance (1) to a height which is less than the height of the basic appliance (1) itself,
- which has a length in the direction of the lengthways projection of the edge of the basic appliance (1) which is no longer than the length of the edge, and
- which is equipped on its inner side, which is essentially vertical to the upper side (2) of the basic appliance (1) and pointing to the upper side (2) of the basic appliance (1) with a plug-in connector (12) for the terminals for data links with the computer in a locked position, and on the underside lying on the upper side (2) of the basic appliance (1) with a connection to the basic appliance (1),
**by the fact** that on the side of the basic appliance (1) on which the connection piece (11) is located the basic appliance (1) has a recess (19) in the form of the connection piece (11) in which there is a connector fixture (20) which corresponds to the size of the plug-in connector (12),
**by the fact** that on the upper side of the basic appliance first fixing projections (13) are provided,
**by the fact** that a first mounting panel (15) is provided which is firmly connected to the underside of the computer and which has the first fixing recesses (14) for receiving the first fixing projections (13) in an insertion position which taper in the locking position under the first fixing projections (13), and
**by the fact** that on the upper side (2) of the appliance (1) there are second fixing recesses (22) and/or second fixing projections and at corresponding positions on the underside in contrast to this there are second fixing projections and/or second fixing recesses (22) for mounting the extension elements.

2. Module arrangement in accordance with Claim 1, **characterized by the fact** that not only the connection piece (11) but also the first fixing projections (13) on the upper side (2) of the basic appliance (1) are arranged indirectly so that they are located on a second mounting panel (3) which is on the upper side (2) and at one edge is linked at one edge with the basic appliance (1) by means of a hinged joint (4) so that it can be swivelled.

3. Module arrangement in accordance with claim 2, **characterized by the fact** that the second mounting panel (3) is made of resilient sheet metal and that the hinged joint (4) is designed with openings (6) and/or tapering in the area of the swivelling axis (5).

4. Module arrangement in accordance with claim 3, **characterized by the fact** that the second fixing projections (23) are formed through the first fixing projections (13).

5. Module arrangement in accordance with claims 2 or 4, **characterized by the fact** that the first mounting panel (15) is fixed to the underside of the computer with a clearing which corresponds to the height of the first fixing projections (13) on contact with the first fixing recessions (14).

6. Module arrangement in accordance with Claims 1 to 5, **characterized by the fact** that on the inner side of the connection piece (11) there is another coupling element (21) which corresponds to a further coupling element (21) in the recess (19).

7. Module arrangement in accordance with Claims 1 to 6, **characterized by the fact** that the second fixing projections (23) and the second fixing recesses (22) are designed as live parts for supplying extension elements with operating voltage.

8. Module arrangement in accordance with Claims 2 to 7, **characterized by the fact** that a detent pawl (16) is provided which is designed as a springy projection (17) from the upper side, which is pressed down in the inserting position and in the locking position catches in a locking recess (18) on the underside of the computer and at which a holding-down clamp for unlocking is located.

9. Module arrangement in accordance with Claim 8, **characterized by the fact** that the detent pawl (16) is sawn out as part of the second mounting panel (3) and the locking recess (18) is located in the first mounting panel (15).

10. Module arrangement for extending portable computers with a basic appliance on or in which the portable computer can be placed or inserted and to which one or more extension elements can be connected,
whereby there is a data link between the computer and the basic appliance, and the basic appliance is equipped with terminals for operating voltage and/or data connections for extension elements,
**characterized by the fact** that there is a contact panel (103) on the upper side (102) of the basic appliance (101) which is so effectively connected with a mounting panel (106) fixed to the underside of the computer that if the computer is inserted or placed on top there is a form and/or a force closure between the contact panel (103) and the mounting panel (106) and that on the underside of the basic appliance (101)a mounting panel (106) is located with which an effective connection can be made to a contact panel (103) attached to the upper side of an extension element in such a way that if the extension element is in place there is a form and/or a force closure between the contact panel (103) and the mounting panel (106).

11. Module arrangement for extending portable computers in accordance with Claim 10, **characterized by the fact** that a cable set (107) is provided on one side of the basis appliance (101) for making the data link between the basic appliance and the computer and the cable has a plug-in connector (108) which is compatible with the data connection terminal of the computer.

12. Module arrangement for extending portable computers in accordance with Claim 11, **characterized by the fact** that on the side of the basic appliance (101) on which the connection cable (107) is located there is a recess (109) corresponding to the shape of the plug-in connector (108) in whose base a socket (110) is located which corresponds to the size of the plug-in connector (108).

13. Module arrangement for extending portable computers in accordance with Claim 10 or 11, **characterized by the fact** that not only the cable set (107) but also the mounting panel (106) is located indirectly on the upper side (102) of the basic appliance (101) in such a way that they are located on a second mounting panel which lies on the upper side (102) and which is linked to the basic appliance at one edge by means of a catch.

14. Module arrangement for extending portable computers in accordance with Claim 13, **characterized by the fact** that the catch and/or the front edge of the second mounting panel enables the computer's binding turning range when slanted.

15. Module arrangement for extending portable computers in accordance with Claim 10, **characterized by the fact** that on one side of the basic appliances a radio, infrared or ultrasound terminal is provided as the terminal for making the data link between the basic appliance and the computer.

16. Module arrangement for extending portable computers in accordance with Claims 10 to 15, **characterized by the fact** that on the upper side of the basic appliance an additional coupling element (111) is located which corresponds to a further coupling element on the underside of the basic appliance (101).

17. Module arrangement for extending portable computers in accordance with Claims 10 to 16, **characterized by the fact** that the contact surface (103) or the mounting panel (106) consists of a magnetic foil and conversely the mounting panel (106) or the contact surface (103) consists of magnetically soft material.

18. Module arrangement for extending portable computers in accordance with Claims 10 to 17, **characterized by the fact** that the contact surface (103) and the mounting panel (106) are designed as the respective components of a Velcro fastener.

19. Module arrangement for extending portable computers in accordance with Claims 10 to 18, **characterized by the fact** that the mounting panel (106) is attached to the underside of the computer with a clearance.

20. Module arrangement in accordance with Claims 1 to 19 **characterized by the fact** that a jack for the connection is provided in the socket (20; 110) for the plug-in connector (12; 108).

21. Module arrangement in accordance with Claims 1 to 20 **characterized by the fact** that the extension elements have the same identification as the basic appliance (1; 101).

22. Module arrangement in accordance with Claims 5 or 19 **characterized by the fact** that the clearance to the underside of the computer is made by fixing the mounting panel (15; 106) to the computer by means of double-sided adhesive tape, whereby the clearance of the mounting panel (15; 106) to the underside of the computer corresponds to the thickness of the double-sided adhesive tape.

## Revendications

1. Disposition de modules pour compléter des ordinateurs portables par un appareil de base dans lequel l'ordinateur portable peut être placé et auquel des unités complémentaires peuvent se connecter, il existe alors une liaison de données entre l'ordinateur et la base; cette dernière est également pourvue de moyens de connexion pour la tension de service et/ou la liaison de données des unités complémentaires. Cette disposition présente les **caractéristiques suivantes:**
la face supérieure (2) de l'appareil de base (1) supporte sur un côté un élément de connexion (11), affleurant le bord de l'appareil, élément
- qui dépasse la face supérieure (2) de la base (1) d'une hauteur inférieure à la hauteur de la base (1),
- dont la longueur, dans le sens de la longueur du bord de la base (1), ne dépasse pas cette dernière et
- qui est muni d'une fiche de connexion (12) pour établir la liaison de données avec l'ordinateur lorsque ce dernier se trouve à la position d'arrêt; cette fiche de connexion se trouve sur la face intérieure de l'élément, en direction de la face supérieure(2) de la base(1) et disposée en principe perpendiculairement à cette face(2). La face inférieure de l'élément de connexion, placée sur la face supérieure (2) de la base (1), est munie d'une connexion à la base (1);
l'appareil de base (1) présente un renfoncement (19) sur le côté qui supporte l'élément de connexion (11), ce renfoncement a la même forme que l'élément de connexion (11) et comporte dans son fond une prise femelle(20) correspondant aux dimensions de la fiche de connexion (12);
la face supérieure de la base (1) comporte un premier groupe d'ergots de fixation(13);
une première plaque de fixation (15) sera fixée à la face inférieure de l'ordinateur; elle est munie d'un premier groupe d'encoches de fixation (14) dans lesquels les ergots de fixation du premier groupe(13) se mettent à la position de pose; les encoches s'amincissent dans la direction de la position d'arrêt pour être en prise avec les ergots de fixation du premier groupe(13); et
un deuxième groupe d'encoches de fixation (22) et/ou d'ergots de fixation est disposé sur la face supérieure (2) de l'appareil de base (1) et, conformément à cela, un deuxième groupe d'ergots de fixation et/ou d'encoches de fixation(22) est situé aux positions correspondantes de sa face inférieure afin de permettre la fixation d'unités complémentaires.

2. Disposition de modules conformément à la revendication 1, **caractérisée** par la disposition de l'élément de connexion (11) ainsi que d'un premier groupe d'ergots de fixation (13) sur la face supérieure (2) de la base (1) par l'intermédiaire d'une deuxième plaque de fixation (3) disposée sur la face supérieure (2) et articulée sur la base (1) au moyen d'une charnière (4) au bord pour permettre le pivotement.

3. Disposition de modules conformément à la revendication 2, **caractérisée** par le fait que la deuxième plaque de fixation (3) est constituée par une tôle élastique et que la charnière (4) est réalisée par des entailles (6) et/ou par des étranglements dans cette tôle au niveau de l'axe de pivotement (5).

4. Disposition de modules conformément aux revendications 1 à 3, **caractérisée** par le fait que le deuxième groupe d'ergots de fixation (23) est formé par le premier groupe d'ergots de fixation (13).

5. Disposition de modules conformément à la revendication 2 ou 4, **caractérisée** par la fixation de la première plaque de fixation (15) à la face inférieure de l'ordinateur avec un jeu qui correspond à la hauteur des ergots de fixation du premier groupe (13) lorsqu'ils sont en prise avec les encoches de fixation du premier groupe (14).

6. Disposition de modules conformément aux revendications 1 à 5, **caractérisée** par la disposition d'un élément de liaison optique (21) supplémentaire sur la face intérieure de l'élément de connexion (11), qui correspond à un deuxième élément de liaison optique (21) situé dans le renfoncement (19).

7. Disposition de modules conformément aux revendications 1 à 6, **caractérisée** par le fait que les ergots de fixation (23) et les encoches de fixation (22) du deuxième groupe sont conçus comme éléments conducteurs de l'électricité pour assurer l'alimentation en énergie des unités complémentaires.

8. Disposition de modules conformément aux revendications 2 à 7, **caractérisée** par un cliquet d'arrêt (16), conçu comme ergot élastique(17) qui dépasse la face supérieure et qui est poussé vers le bas lors de la pose; à la position d'arrêt, il s'enclenche dans une encoche de verrouillage(18) située sur la face inférieure de l'ordinateur et peut être déverrouillé par un dispositif pour presser le cliquet.

9. Disposition de modules conformément à la revendication 8, **caractérisée** par le fait que le cliquet d'arrêt (16) est découpé dans la deuxième plaque de fixation (3) et que l'encoche de verrouillage (18) se trouve dans la première plaque de fixation (15).

10. Disposition de modules pour compléter des ordinateurs portables par un appareil de base dans ou sur lequel l'ordinateur portable peut être placé et auquel une ou plusieurs unités complémentaires peuvent se connecter, il existe alors une liaison de données entre l'ordinateur et la base; cette dernière est également pourvue de moyens de connexion pour la tension de service et/ou pour la liaison de données des unités complémentaires, cette disposition est **caractérisée** d'un côté par une plaque de contact (103) disposée sur la face supérieure (102) de l'appareil de base (101) qui peut se relier à une plaque de fixation (106) fixée à la face inférieure de l'ordinateur de telle façon qu'il existe un engagement positif et/ou une adhérence entre la plaque de contact (103) et la plaque de fixation (106) lorsque l'ordinateur est placé dans ou sur la base, et d'autre côté par une plaque de fixation (106) disposée sur la face inférieure de l'appareil de base (101) qui peut se relier à une plaque de contact (103) fixée sur la face supérieure d'une unité complémentaire de telle façon qu'il existe un engagement positif et/ou une adhérence entre la plaque de contact (103) et la plaque de fixation (106) lorsque l'unité complémentaire est placée dans ou sur la base.

11. Disposition de modules pour compléter des ordinateurs portables, conformément à la revendication 10, **caractérisée** par un câble de connexion (107) permettant d'établir la liaison de données entre la base et l'ordinateur, câble qui est disposé sur un côté de la base (101) et muni d'une fiche de connexion (108) compatible avec la prise de connexion pour la liaison de données de l'ordinateur.

12. Disposition de modules pour compléter des ordinateurs portables, conformément à la revendication 11, **caractérisée** par un renfoncement (109) correspondant à la forme de la fiche de connexion (108) et situé sur le côté de la base (101) qui comporte le câble de connexion (107). Le fond de ce renfoncement comprend une prise femelle (110) qui correspond aux dimensions de la fiche de connexion (108).

13. Disposition de modules pour compléter des ordinateurs portables, conformément à la revendication 10 ou 11, **caractérisée** par le fait que le câble de connexion (107) et la plaque de fixation (106) sont disposés sur la face supérieure (102) de l'appareil de base (101) par l'intermédiaire d'une deuxième plaque de fixation disposée sur la face supérieure (102) et articulée sur la base au moyen d'une butée au bord.

14. Disposition de modules pour compléter des ordinateurs portables, conformément à la revendication 13, **caractérisée** par le fait que la butée et/ou le bord avant de la deuxième plaque de fixation permettent une zone de pivotement adhérente de l'ordinateur en cas de positionnement oblique.

15. Disposition de modules pour compléter des ordinateurs portables, conformément à la revendication 10, **caractérisée** par le fait que le moyen de connexion pour établir la liaison de données entre la base et l'ordinateur est conçu comme liaison radioélectrique, à infrarouge ou ultrasonore, disposée sur un côté de la base.

16. Disposition de modules pour compléter des ordinateurs portables, conformément à une des revendications 10 à 15, **caractérisée** par un élément de liaison optique (111) supplémentaire disposé sur la face supérieure de la base, qui correspond à un autre élément de liaison optique (111) situé sur la face inférieure de la base (101).

17. Disposition de modules pour compléter des ordinateurs portables, conformément à une des revendications 10 à 16, **caractérisée** par le fait que soit la surface de contact (103), soit la plaque de fixation (106) est constituée par une feuille magnétique et qu'en revanche, soit la plaque de fixation (106), soit la surface de contact (103) consiste en un matériau magnétique doux.

18. Disposition de modules pour compléter des ordinateurs portables, conformément à une des revendications 10 à 17, **caractérisée** par le fait que la surface de contact (103) et la plaque de fixation (106) sont conçues comme les deux parties constitutives d'une fermeture Velcro.

19. Disposition de modules pour compléter des ordinateurs portables, conformément à une des revendications 10 à 18, **caractérisée** par le fait que la plaque de fixation (106) est fixée sur la face inférieure avec un jeu.

20. Disposition de modules pour compléter des ordinateurs portables, conformément à une des revendications 1 à 19, **caractérisée** par une prise femelle (20; 110) à laquelle la fiche de connexion (12; 108) se relie afin d'établir une connexion conductrice.

21. Disposition de modules conformément à une des revendications 1 à 20, **caractérisée** par le fait que les unités complémentaires présentent les mêmes caractéristiques que l'appareil de base (1; 101).

22. Disposition de modules conformément à la revendication 5 ou 19, **caractérisée** par la réalisation du jeu entre la face inférieure de l'ordinateur et la plaque de fixation (15; 106) par la fixation de cette dernière sur l'ordinateur au moyen d'une bande adhésive double face, le jeu entre la plaque de fixation (15; 106) et la face inférieure de l'ordinateur correspond alors à l'épaisseur de la bande adhésive double face.
